# EUROPEAN PATENT APPLICATION

(11) **EP 4 563 002 A1**
(43) Date of publication of application: **04.06.2025**
(21) Application number: 24216332.7
(22) Date of filing: 29.11.2024
(51) Int. Cl.: A23B 4/005, A23B 4/023, A23B 4/28, A23L 13/72

(54) **METHOD FOR THE INDUSTRIAL PRODUCTION OF COOKED HAM**

(30) Priority: 29.11.2023 BE 202305971
(71) Applicant: Produits de Viande d'ARGIFRAL SA, 4650 Herve (BE)
(72) Inventor: VAN DAMME, Philippe, 4650 Herve (BE)
(74) Representative: Brantsandpatents bv

(57) **Abstract**

The current invention relates to a method for the industrial production of cooked ham, wherein said method comprises a step of injecting pork leg meat with a brine solution comprising water and salt, wherein said water is ice water at a temperature of between 2 and 6°C, wherein said injection of brine occurs by means of a multineedle injector, after which said brine-injected meat is tumbled for at least 3 hours in a tumbler at a temperature of 7 °C or less and subsequently cooked in a cooking shrink bag or thermoformed plastic film for 9 to 15 hours, thereby forming the cooked ham. The current invention also relates to cooked ham produced via said method for the industrial production of cooked ham.

## Description

### FIELD OF THE INVENTION

The present invention relates to a method for the industrial production of cooked ham. More specifically, it encompasses a series of steps that enhance the flavor, texture, and overall quality of the cooked ham, while also ensuring food safety and efficient production.

### BACKGROUND

Cooked ham is a popular meat product appreciated for its unique taste and versatility, but demands meticulous attention to processing parameters to attain optimal taste, texture, and visual appeal.

RU2208351, US5679391, and CN104432197, for instance, describe methods for manufacturing various types of meat, including ham. Conventional methods, however, often encounter issues such as uneven brine distribution and suboptimal cooking techniques, leading to inconsistent product quality. Conventional methods of producing cooked ham thus have limitations in terms of consistency, flavor infusion, and preservation.

Therefore, there is a need for an improved method that overcomes these drawbacks and yields a superior cooked ham product.

### SUMMARY OF THE INVENTION

The present invention and embodiments thereof serve to provide a solution to one or more of above-mentioned disadvantages.

To this end, the present invention relates to a method for the industrial production of cooked ham according to claim 1. In particular, the method comprises a step of injecting pork leg meat with a brine solution comprising water and salt, wherein said water is ice water at a temperature of between 2 and 6°C, wherein said injection of brine occurs by means of a multi-needle injector, after which said brine-injected meat is tumbled and subsequently cooked in a cooking shrink bag or thermoformed plastic film, thereby forming the cooked ham.

Preferred embodiments of the method are described in any one of the dependent claims 2 to 14.

In a second aspect, the present invention relates cooked ham according to claim 15, preferably produced via the method according to any one of claims 1 to 14.

### DETAILED DESCRIPTION OF THE INVENTION

The present invention concerns a method for the industrial production of cooked ham. More specifically, it encompasses a series of steps that enhance the flavor, texture, and overall quality of the cooked ham, while also ensuring food safety and efficient production.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the invention provides a method for the industrial production of cooked ham. Said method comprises a step of injecting pork leg meat with a brine solution comprising water and salt.

Said water is ice water at a temperature of between 2 and 6°C. Said pork leg meat has a temperature of 7 °C or less when being injected. The ice water helps maintain a low temperature of the meat during the brining process.

Said injection of brine occurs by means of a multi-needle injector.

Said multi-injector comprises between 0.10 and 0.15 needles per cm², preferably 0.12 needles per cm² of injection surface. For example, the multi-needle injector comprises between 100 and 120 needles, such as between 105 and 115 needles, or 110 needles. For example, the multi-needle injector comprises 110 needles over an injection surface of 911 cm², which is 0.12 needles per cm².

In the present context "injection surface" relates to the effective area where the needles of the multi-injector are making contact with the meat to inject the brine solution.

The needles have a diameter of 3 mm, 4 mm, or 5 mm, preferably 4 mm, and inject a volume of brine solution in said pork leg meat resulting in a brine-injected meat wherein the brine solution comprises between 7 and 20 wt.% of the total pork leg meat weight, or between 8 and 19 wt.% of the total pork leg meat weight, preferably between 9 and 18 wt.% of the total pork leg meat weight.

This meticulous injection process ensures uniform brine distribution and optimized flavor infusion, tenderness and moisture retention, thus guaranteeing consistently excellent product quality.

After injecting said brine solution, the brine-injected meat is tumbled for at least 3 hours in a tumbler at a temperature of 7 °C or less, and is subsequently cooked in a cooking shrink bag or thermoformed plastic film for 9 to 15 hours, thereby forming the cooked ham.

The tumbling process improves the distribution of flavors throughout the meat, ensuring a consistent and enhanced taste experience. The meat is tumbled for a specified duration to achieve the desired flavor infusion.

In an embodiment, the method comprises a step of measuring the temperature of the pork leg meat prior to injecting the brine solution, and adjusting the temperature of the brine solution to be within 2 °C or less of the meat temperature before injecting the brine solution into the meat. This temperature alignment further enhances flavor absorption and uniformity, and in addition it ensure that the meat is not heated when injecting the brine solution.

In an embodiment, the brine solution comprises a salt concentration of between 10 and 25 wt.%. In another or further embodiment, the concentration of salt in the resulting cooked ham is between 1.5 and 2.5 wt.%, preferably between 1.6 and 2.2 wt.%.

In another or further embodiment, the brine solution further comprises sugar, seasonings, and/or preservatives. Such optimized brine solution enhances both flavor complexity and preservation capabilities. Non-limiting examples of seasonings frequently used in brine solutions are: (black) pepper, bay leaves, garlic, onion, thyme, rosemary, cloves, allspice, juniper berries, mustard seeds, coriander seeds, celery seeds, wine, vinegar, and smoke flavor. Non-limiting examples of preservatives frequently used in brine solutions are: sodium nitrite, sodium erythorbate, sodium ascorbate, potassium sorbate, sodium benzoate, calcium propionate, sodium acetate, and phosphates such as sodium phosphate.

As indicated above, the brine-injected meat is tumbled for at least 3 hours in a tumbler at a temperature of 7 °C or less. In an embodiment, the meat is tumbled for at least 4 hours, 5 hours, 6 hours, 7 hours, 8 hours, 9 hours, 10 hours, 11 hours, 12 hours, 13 hours, 14 hours, 15 hours, 16 hours, or at least 17 hours. Preferably, the meat is tumbled for between 3 and 18 hours. In another or further embodiment, the tumbling rate is preferably maximum 8 tumbles per minute, such as 1, 2, 3, 4, 5, 6, 7 or 8 tumbles per minute. Preferably the tumbling rate is between 1 and 7 tumbles per minute, or between 1 and 6 tumbles per minute. Preferably, the tumbling is interrupted by intervals in which he tumbler is at rest. In another or further embodiment, the meat is tumbled for at least 3 hours at a tumbling rate of maximum 8 tumbles per minute, wherein during the tumbling process there are intervals in which the tumbler is at rest.

This tumbling optimizes brine distribution and meat texture, resulting in a more appealing final product. Free brine will be absorbed by meat parts comprising less brine. Tumbling at low tumbling rates allows slight damaging of binding tissue which increases moisture binding, and bruising of muscle tissue leads to proteins at the surface set free and bind the meat parts together.

As indicated before, the tumbled meat is subsequently placed in a cooking shrink bag and cooked for 9 to 15 hours.

Said "cooking shrink bag" is a type of food packaging that is designed to be heat-resistant and suitable for cooking various types of foods, including meats. These bags are typically made from a combination of materials that can withstand high temperatures without melting or releasing harmful substances into the food. The bags are intended to be placed directly in hot water or an oven for cooking, and they help retain moisture and flavors while preventing the food from drying out.

As non-limiting example, said cooking shrink bag can be a plastic bag, such as composed of polyamide polyethylene with ethylene vinyl alcohol (EVOH). The combination of these materials provides a barrier against oxygen, helps maintain moisture, and can withstand the heat of cooking. Polyamide and polyethylene provide the necessary flexibility and sealing properties, while the EVOH layer enhances the barrier against gases, including oxygen. This type of packaging is often used for sous vide cooking, where food is vacuum-sealed in the bag and then cooked at precise temperatures in water. It can also be used for traditional oven cooking. The combination of these materials allows the bag to retain the food's moisture, flavor, and nutritional value while preventing the penetration of external contaminants.

Alternatively, or in addition to the foregoing, the tumbled meat may also be molded in a thermoformed plastic film. Thermoformed plastic film refers to a type of packaging that is created through a process called thermoforming. This process involves heating a plastic sheet until it is pliable, then forming it into a specific shape using a mold.

In an embodiment, the tumbled meat is provided in the ham cooking shrink bag through an automated process comprising supplying the tumbled meat to a molding machine using a conveyor belt, weighing an amount of tumbled meat to be molded, and molding said weighed amount of meat using the molding machine. This provides an efficient time and resource efficient process for providing the meat in cooking shrink bags.

In an embodiment, said ham cooking shrink bag or thermoformed plastic film applies sufficient pressure to the tumbled meat to compactly compress the meat. This compression ensures a uniform shape, texture, and improved slicing characteristics in the final cooked ham product.

In an embodiment, the ham cooking shrink bag or thermoformed plastic film applies a vacuum to the tumbled meat, thereby extracting air from the meat. The objective is to eliminate as much air as possible from the meat.

In an embodiment, said tumbled meat is molded in a metal mold applying pressure to the tumbled meat either directly or after having been placed in such a cooking shrink bag or thermoformed plastic film as discussed above. This also helps in providing a uniform shape, texture, and improved slicing characteristics in the final cooked ham product.

In an embodiment, the tumbled meat is provided in a cooking shrink bag or thermoformed plastic film at a temperature of 12 °C or less.

In an embodiment, the meat in the ham cooking shrink bag or thermoformed plastic film is punctured before cooking said meat. This puncturing results in the removal of excess moisture around the ham. Although some weight loss occurs, the quality of the ham improves.

In a preferred embodiment, the tumbled meat is placed in a cooking shrink bag or thermoformed plastic film which applies a vacuum to the tumbled meat, thereby extracting air from the meat. The objective is to eliminate as much air as possible from the meat. Optionally, and either subsequently or simultaneously, said tumbled meat is molded in a metal mold applying pressure to the tumbled meat either directly or after having been placed in such a cooking shrink bag or thermoformed plastic film as discussed above. This also helps in providing a uniform shape, texture, and improved slicing characteristics in the final cooked ham product. Only after applying the vacuum, and preferably the subsequent molding of the tumbled meat, the meat in the ham cooking shrink bag or thermoformed plastic film is punctured before cooking said meat. This puncturing results in the removal of excess moisture around the meat during the subsequent cooking step. Although some weight loss occurs, the quality, texture, and meat bite of the ham improves, and the ham obtains an improved taste.

In an embodiment, the meat is cooked by gradually raising the temperature until a core temperature of the meat of between 62 °C and 66 °C, preferably 63 °C, 64 °C, or 65 °C is reached. The temperature can be monitored using a thermos-sensor. This temperature stabilizes color, forms specific meat aromas, inactivates enzymes, and gains microbiological safety of the product. Preferably, the core of the cooked ham has the same/similar properties as the outside. By heating the core until between 62 °C and 66 °C, relevant micro-organisms are killed-off. Preferably the maximum outside temperature is 75°C, to avoid undesired damage on the outside. This controlled cooking approach ensures both safe consumption and a consistent, desired texture and appearance.

In an embodiment, the cooked ham after cooking is cooled in a refrigerator to a temperature of 10 °C or less, thereby preserving its quality and safety, enhance its shelf life and facilitate subsequent handling, including ensuring proper storage conditions.

Preferably, said refrigerator comprises a system comprising one or more ventilators configured to pulse air at a temperature of at least - 8°C, preferably of at least -9 °C, more preferably about -10°C for at least 4 hours, preferably at least 5 hours, more preferably for about 6 hours in said refrigerator. Preferably, said refrigerator system is activated as soon as the cooked ham is placed in said refrigerator.

Preferably, said refrigerator comprises a CO₂ fast-cooling cell equipped with two evaporators, suitable for removing heat from the air and thus cooling down the air. Said evaporators are positioned along the length of the cell, thereby increasing the speed of the air pulsed by the ventilators.

Preferably, while the air pulsed in said refrigerator system can reach temperatures as low as -20°C, air is preferably pulsed at at least - 8°C, preferably at least -9 °C, more preferably about -10°C.

The air is preferably pulsed across the width of the cell, enabling it to circulate back to the ventilator more rapidly. Preferably, said CO₂ fast-cooling cell is configured with walls designed to facilitate air movement, thereby supporting the consistent distribution of pulsed air.

This configuration enables the cooked ham to reach the target temperature within a maximum of 6 hours, reducing bacterial risks and enhancing quality.

Preferably, the ventilators and evaporators are configured with sufficient power to cool several trolleys or racks of ham, such as 2, 3, 4, 5, 6, 7, 8, 9, 10, 12, 15, 18, 20, 22, 24, 25, 30, or more trolleys, simultaneously within said cell, preferably allowing for a maximum of 20-30, most preferably about 24 or 25 trolleys, thereby increasing productivity. Said trolleys may have between 5 and 12 shelves for carrying the hams, such as 5, 6, 7, 8, 9, 10, 11, or 12 shelves, each able to carry between 3 and 20 hams, such as 3, 4, 5, 6, 7, 8, 9, 10, 12, 15, 18, or 20 hams each. So in general, each trolly could for instance carry 50, 60, 70, 80, 90, 100, 120, 150, 175, 200, or up to 250 hams, depending on the ham size.

The cooked ham is preferably removed from the cooking shrink bag or thermoformed plastic film at a temperature of 12 °C or less.

In an embodiment, the cooked ham is removed from the ham cooking shrink bag or thermoformed plastic film; smoked, grilled, or braised; and subsequently cooled down to below 10 °C, thereby enhancing flavor profiles and preserving its quality and safety.

In a further embodiment, the smoking of ham can be performed in a smoking cabin (artisanal/traditional method) or with the addition of liquid smoke.

Preferably, the smoking is performed in a smoke cabin, preferably using natural wood chips such as leafwood chips to generate smoke. Said smoke is allowed to circulate around the ham and infuse it. The smoke generated from the burning wood contains aromatic compounds that infuse into the meat, giving it a distinctive smoky flavor and a reddish-brown color. Preferably, the temperature in the cabin is monitored and controlled at between 50 and 60 °C, such as at about 55 °C. In addition, also the humidity and/or airflow in the cabin may be monitored and controlled to ensure optimal smoking conditions. This artisanal approach allows for more control over the smoking process and results in a traditional, rich smokiness. Alternatively, liquid smoke is used to add a smoky flavor to the ham without the need for a physical smoking process. Liquid smoke is typically produced by capturing the smoke from burning wood and condensing it into a liquid form. During processing, the liquid smoke is filtered and purified. To apply this flavor, the ham is usually coated or marinated with the liquid smoke, allowing it to penetrate the meat's surface. The ham is subsequently cooked using traditional methods. The liquid smoke method provides a convenient way to achieve a smoky flavor without the need for specialized smoking equipment.

In an embodiment, said pork leg meat that is used for the preparation of cooked ham, is preferably taken from the ham of a pig, and/or from the back leg of a pig.

Preferably, said pork leg meat pork leg meat was maintained at a temperature of 7 °C or less to preserve freshness, or at 4 °C or less before injection.

The final step involves conditioning and packaging the cooked ham at a temperature of 12 °C or less. This step ensures the preservation of flavor, quality, and safety throughout the packaging process. Prior to conditioning and packaging, the cooked ham may be cut into smaller parts at a temperature of 12 °C or less to meet specific packaging requirements or consumer preferences.

Additionally, a metal detection process may be performed on the packaged ham to identify and remove any potential metal contaminants, further enhancing product safety.

In a second aspect, the present invention provides cooked ham, preferably produced via the method as described above in any one of the embodiments. Advantages linked to said embodiments, equally relate to the cooked ham.

The disclosed method for the industrial production of cooked ham offers improvements in flavor, texture, and safety. By optimizing the various processing steps, the resulting cooked ham is of superior quality, consistent in shape and flavor, and satisfies consumers' preferences for a flavorful and safe meat product.

The invention is further described by the following non-limiting examples which further illustrate the invention, and are not intended to, nor should they be interpreted to, limit the scope of the invention.

### EXAMPLES

The present invention will now be further exemplified with reference to the following examples. The present invention is in no way limited to the given examples.

### Example: Industrial Production of Cooked Ham

The method for industrial production of cooked ham entails a series of steps that elevate the flavor, texture, and overall quality of the cooked ham, all while maintaining food safety and efficient production.

As a starting point, fresh pork leg meat sourced from the ham of a pig is used. This meat is provided at a temperature of 7°C or less to ensure its quality and microbiological safety.

### Step 1: Injection of Brine Solution

In the initial stage, a brine solution is meticulously prepared. This brine solution comprises ice water, salt with a preferred concentration between 10 and 25 wt.%, sugar, seasonings such as black pepper, garlic, or thyme, and preservatives, such as sodium nitrite or sodium erythorbate. Ensuring the quality and freshness of the meat remains paramount throughout the process.

To inject the carefully crafted brine solution into the pork leg meat, a multi-needle injector is employed. The injector comprises 110 needles on an injection surface of about 911 cm² The needles have a diameter of 4 mm. The temperature of the pork leg meat is measured before injecting the brine solution. In the present example, the pork leg meat has a temperature of 5°C. The brine solution's temperature is adjusted to align within 2°C of the meat's temperature, resulting in a brine solution temperature of around 3°C.

The brine solution is then injected into the pork leg meat using the multi-needle injector. This meticulous injection process guarantees even distribution of the brine solution throughout the meat. As a result, the brine-injected meat is now prepared for the subsequent stages. Finally, the brine-injected meat comprises between 7 and 20 wt.% of the total pork leg meat weight.

### Step 2: Tumbling and Cooking

The brine-injected meat is carefully placed into a tumbler, where it tumbles for about 17 to 18 hours at a controlled rate of 4 tumbles per minute at a temperature of 7 °C or less. During this period of 17 to 18 hours, the tumbling may be interrupted by resting intervals, where the tumbling rate is 0 tumbles per minute. This tumbling step is vital for achieving an even distribution of flavors and refining the meat's texture. The tumbling process optimizes the interaction between the brine and the meat, leading to enhanced flavor absorption, tenderness, and moisture retention.

After tumbling, the tumbled meat is placed into a cooking shrink bag. The bag, composed of materials such as polyamide, polyethylene, and ethylene vinyl alcohol (EVOH), withstands high temperatures without compromising the quality of the food. The meat is subsequently molded in a metal mold. The meat is tightly compressed within the bag and mold, ensuring uniform shape and texture.

Before cooking, the cooking shrink bag is punctured, releasing excess moisture from around the meat. This step significantly improves the overall quality of the final product. The cooking process takes about 9 to 15 hours, and is meticulously controlled by gradually raising the temperature until the core temperature of the meat reaches about 64°C. This controlled cooking approach ensures safety, desired texture, and consistent appearance.

### Step 3: Finalization and Packaging

Following the cooking phase, the cooked ham is promptly cooled in a refrigerator to a temperature of 10°C or less. This cooling process preserves quality, extends shelf life, and facilitates subsequent handling and packaging.

With the ham removed from the cooking shrink bag, additional processes such as smoking, grilling, or braising may be applied based on desired flavor profiles. In our scenario, we choose the smoking process. The ham is positioned in a smoking cabin alongside natural wood chips, which generate smoke. The temperature within the cabin is maintained at between 50 °C and 60 °C, with a preferred temperature of about 55 °C, allowing the smoke to infuse into the ham and impart a rich smoky flavor.

Alternatively, liquid smoke can be used to achieve a smoky flavor without the need for a physical smoking process. The ham is coated with liquid smoke, which permeates the meat's surface and enhances its flavor.

After the flavor enhancement step, the ham is cooled down to below 10°C to uphold its quality and safety.

The resulting ham has a salt concentration of between 1.6 and 2.2 wt.%.

### Step 4: Packaging and Metal Detection

The cooled ham is meticulously packaged using suitable materials specifically designed for food products. These packaging materials ensure the ham's moisture, flavor, and safety are preserved throughout the packaging process.

To further ensure the product's safety, a metal detection process is carried out on the packaged ham. This step identifies and removes any potential metal contaminants, guaranteeing the final product's quality and safety.

In summary, by meticulously adhering to these steps and parameters, the method for the industrial production of cooked ham achieves uniform flavor distribution, optimal texture, and enhanced overall quality. The outcome is a consistently excellent product that aligns with consumers' preferences for a flavorful, safe, and high-quality cooked ham.

## Claims

1. Method for the industrial production of cooked ham, wherein said method comprises a step of injecting pork leg meat with a brine solution comprising water and salt, wherein said water is ice water at a temperature of between 2 and 6°C, wherein said pork leg meat has a temperature of 7 °C or less when being injected, wherein said injection of brine occurs by means of a multi-needle injector, said multi-injector comprises between 0.10 and 0.15 needles per cm² of injection surface, the needles having a needle diameter of 4 mm, and wherein said needles inject a volume of brine solution in said pork leg meat resulting in a brine-injected meat wherein the brine solution comprises between 8 and 19 wt.% of the total pork leg meat weight, after which said brine-injected meat is tumbled for at least 3 hours in a tumbler at a temperature of 7 °C or less and subsequently cooked in a cooking shrink bag or thermoformed plastic film for 9 to 15 hours, thereby forming the cooked ham.

2. Method according to claim 1, further comprising a step of measuring the temperature of the pork leg meat prior to injecting the brine solution, and adjusting the temperature of the brine solution to be within 2 °C or less of the meat temperature before injecting the brine solution into the meat.

3. Method according to any one of the previous claims, wherein the brine solution comprises a salt concentration of between 10 and 25 wt.%, optionally wherein the brine solution further comprises sugar, seasonings, and/or preservatives.

4. Method according to any one of the previous claims, wherein said tumbling of said brine-injected meat is performed at a tumbling rate of between 1 and 6 tumbles/minute.

5. Method according to any one of the previous claims, wherein the meat in the ham cooking shrink bag or thermoformed plastic film is punctured before cooking said meat.

6. Method according to any one of the previous claims, wherein the cooked ham is removed from the ham cooking shrink bag or thermoformed plastic film; smoked, grilled, or braised; and subsequently cooled down to below 10 °C.

7. Method according to claim 6, wherein the smoking of ham is performed in a smoke cabin, using natural wood chips to generate smoke, wherein said smoke is allowed to circulate around the ham and infuse it, and wherein the temperature in the cabin is monitored and controlled at between 50 and 60 °C.

8. Method according to any one of the previous claims, wherein the meat is cooked by gradually raising the temperature until a core temperature of the meat of between 62 °C and 66 °C, preferably 64 °C is reached.

9. Method according to any one of the previous claims, wherein the tumbled meat is provided in the ham cooking shrink bag or thermoformed plastic film through an automated process comprising supplying the tumbled meat to a molding machine using a conveyor belt, weighing an amount of tumbled meat to be molded, and molding said weighed amount of meat using the molding machine.

10. Method according to any one of the previous claims, wherein said ham cooking shrink bag or thermoformed plastic film applies sufficient pressure to the tumbled meat to compactly compress the meat, or wherein said ham in said bag or film is further molded in a metal mold before cooking, which provides said sufficient pressure to the tumbled meat to compactly compress the meat.

11. Method according to any one of the previous claims, wherein the tumbled meat is provided in a cooking shrink bag or thermoformed plastic film at a temperature of 12 °C or less.

12. Method according to any one of the previous claims, wherein the cooked ham after cooking is cooled in a refrigerator to a temperature of 10 °C or less.

13. Method according to any one of the previous claims, wherein a vacuum is applied to the meat in the ham cooking shrink bag or thermoformed plastic film, thereby extracting air from the meat, before or while the meat is molded in a metal mold, which preferably provides pressure to the tumbled meat to compress the meat, after which the meat in said cooking shrink bag or thermoformed plastic film is punctured before cooking said meat.

14. Method according to any one of the previous claims, wherein the concentration of salt in the cooked ham is between 1.5 and 2.5 wt.%, preferably between 1.6 and 2.2 wt.%.

15. Cooked ham produced via the method according to any one of the previous claims 1 to 14.
